# EUROPÄISCHE PATENTANMELDUNG

(11) **EP 3 103 574 A1**
(43) Veröffentlichungstag der Anmeldung: **14.12.2016**
(21) Anmeldenummer: 16173524.6
(22) Anmeldetag: 08.06.2016
(51) Int. Cl.: B23B 31/16

(54) **SPANNSYSTEM ZUM EINSPANNEN VON WERKSTÜCKEN, SOWIE SPANNFUTTER UND WERKZEUGMASCHINE HIERMIT**

(30) Priorität: 08.06.2015 DE 102015109026
(71) Anmelder: Atil, Hasan Bahri, 87439 Kempten (DE); Atil, Ahmet Teoman, 87439 Kempten (DE)
(72) Erfinder: Atil, Hasan Bahri, 87439 Kempten (DE); Atil, Ahmet Teoman, 87439 Kempten (DE)
(74) Vertreter: Winter, Brandl, Fürniss, Hübner, Röss, Kaiser, Polte - Partnerschaft mbB

(57) **Zusammenfassung**

Offenbart ist ein Spannsystem zum Einspannen von Werkstücken, insbesondere Werkstücken (8) mit zumindest teilweise sphärischer Umfangsoberfläche, an Werkzeugmaschinen, insbesondere Drehbänken, mit einer Spannbacke (6, 106, 206), welche direkt oder indirekt an einem Spannfutter der Werkzeugmaschine, allgemein ausgedrückt an einem Spannbackenträger (4), anordenbar ist.

Offenbart sind weiterhin ein Spannfutter für eine Werkzeugmaschine mit wenigstens einem derartigen Spannsystem, sowie eine Werkzeugmaschine mit mindestens einem derartigen Spannfutter.

## Beschreibung

Die Erfindung betrifft ein Spannsystem zum Einspannen von Werkstücken an Werkzeug- oder Greifmaschinen, insbesondere Drehbänken. Weiterhin betrifft die vorliegende Erfindung ein Spannfutter für eine Werkzeugmaschine mit wenigstens einem derartigen Spannsystem, sowie eine Werkzeugmaschine, die ein mit der erfindungsgemäßen Spannbacke ausgerüstetes Spannfutter aufweist.

Spannbacken der in der Frage stehenden Art sind beispielsweise an Spannfuttern angeordnet, welche ein zu bearbeitendes Werkstück aufnehmen. Ein allgemein bekanntes Beispiel eines derartigen Spannfutters mit Spannbacken ist ein Drehfutter an Drehbänken.

Hierbei sind an dem Spannfutter in Umfangsrichtung gleichverteilt angeordnete Spannbacken vorgesehen, die jeweils für einen Einspannvorgang in Richtung auf das Werkstück zustellbar und für einen Ausspannvorgang von diesem wegfahrbar ist. Die Spannbacken haben einen Einspannkörper, der in Anlage mit einem Abschnitt der Umfangsoberfläche des Werkstücks bringbar bzw. von diesem Abschnitt abhebbar ist. Die einzelnen Spannbacken werden hierbei in der Regel von einem zentralen Antrieb für meist symmetrisch zur Längsmittelachse des Spannfutters verlaufende Bewegungen zwangsgesteuert.

Die in der Praxis wohl am häufigsten anzutreffende Ausgestaltungsform eines derartigen Spannfutters ist ein Dreibackenfutter, bei dem drei Spannbacken in Umfangsrichtung des Spannfutters jeweils im Abstand von 120 Grad angeordnet sind. Weitere bekannte Bauformen sind Vier- oder Sechsbackenfutter, bei denen dann die einzelnen Spannbacken umfangsseitig im Abstand von 90 Grad bzw. 60 Grad angeordnet sind.

Den Spannfutterbauformen ist gemein, dass zwischen den Einspannkörpern der Spannbacken ein Werkstück mit einer gewissen Haltekraft einspannbar und gehalten oder in Rotation versetzbar ist, um in einem spanabhebenden Bearbeitungsvorgang bearbeitet zu werden.

Die Verwendung derartiger Spannfutter mit Spannbacken, deren Einspannkörper radial von außen gegen das zu bearbeitende Werkstück drücken, ist insbesondere dann unproblematisch, wenn das Werkstück hinreichend stabil, beispielsweise ein massiver Vollkörper ist, der die über die Einspannkörper aufgebrachten Einspann- bzw. Haltekräfte problemlos aufnehmen kann.

Anders stellt sich der Sachverhalt dar, wenn das zu bearbeitende Werkstück empfindlich im Sinne einer möglichen Verformungsgefahr durch die aufgebrachten Haltekräfte ist. Um dieser Problematik zu begegnen, sind Spannbacken-Sonderbauformen entwickelt worden, insbesondere sogenannte Pendelbacken. Pendelbacken bestehen in der Regel aus einer beweglichen Pendelbrücke mit zwei Einspannkörpern, wobei die Pendelbrücke mit Hilfe eines Lagerbolzens an einem Körper der Spannbacke montiert ist (vergl. z.B. DE 199 34 375 B4). Da der Körper wie bei einer herkömmlichen, einteiligen Spannbacke am Spannfutter befestigt werden kann, sind Pendelbacken einfach und schnell nachzurüsten. Mit Hilfe von Pendelbacken können konventionelle Dreibackenfutter innerhalb sehr kurzer Zeit und insbesondere kostengünstig auf eine Sechspunktspannung umgerüstet werden, bei der gleichmäßig im Winkel von jeweils 60 Grad am Werkstückaußenumfang oder auch an einem Innendurchmesser verteilte Einspannpunkte die Spannkräfte anstelle von drei auf sechs Punkte übertragen. Werkstückverformungen lassen sich hierdurch wesentlich verringern und insofern sind Pendelbacken für verformungsempfindliche, beispielsweise dünnwandige Bauteile besonders gut geeignet. Da die die beiden Einspannteile tragende Pendelbrücke pendelt, also beweglich am Backenkörper gelagert ist, erfolgt darüber hinaus innerhalb eines gewissen Bereichs auch eine Anpassung an nicht vollständig runde Werkstücke, beispielsweise Gusskörper.

Allerdings sind bei Pendelbacken die beiden Einspannkörper an der Pendelbrücke in einem festgelegten Abstand zueinander (symmetrisch zu der durch den Lagerbolzen definierten Schwenk- oder Pendelachse der Brücke) festgelegt. Je nach Spannweite der Pendelbrücke sind somit die beiden Einspannkörper in einem unterschiedlichen, jedoch jeweils festgelegten Abstand zueinander angeordnet. Dies bedeutet, dass mit einem Satz von Pendelbacken nur Werkstücke innerhalb eines relativ beschränkten Durchmesserbereichs eingespannt werden können. Von einem bestimmten Durchmesserbereich nach oben oder unten abweichende Durchmesser eines Werkstücks bedingen einen anderen Satz von Pendelbrücken mit einem entsprechend größeren oder kleineren Abstand der Einspannkörper voneinander.

In der Praxis kann dies in nachteiliger Weise ein häufigeres Umrüsten der Werkzeugmaschine bedeuten.

Weitestgehend unabhängig von den oben geschilderten Umständen ist darüber hinaus der Sachverhalt zu sehen, dass bei der Verwendung von gehärteten Backen die Problematik eines für Präzisionsbearbeitungen unzureichenden Rundlaufs besteht. Es ist bekannt, Spannbacken vor einer Präzisionsbearbeitung auszudrehen. Der Hintergrund hierfür ist, dass Spannbacken (Aufsatzbacken) für das Einspannen von Drehrohlingen, bei denen eine hohe Einmittgenauigkeit (noch) nicht benötigt wird, durchaus ausreichend sind. Für eine genaue Einspannung bereits bearbeiteter Werkstücke sind sie jedoch nicht ohne weiteres verwendbar, da die toleranzbedingten Abmessungsunterschiede aller an der Lagerung und dem Antrieb der einzelnen Spannbacken beteiligten Einzelteile durch ihre Summierung zu letztendlich unterschiedlichen radialen Stellungen der Spannbacken führen. Da diese Unterschiede größer als nach der DIN vorgeschriebene Rundlaufabweichungen sind, kann diesem Problem herkömmlich nur durch entsprechende Nachbearbeitungen der Spannbacken vor deren Einsatz begegnet werden. Hierzu ist es bekannt, die Spannbacken zur Erreichung der geforderten hohen Rundlaufgenauigkeit und Wiederholgenauigkeit auf dem Drehfutter auszuschleifen oder auszudrehen. Insbesondere bei gehärteten Spannbacken ist hierbei das Ausdrehen aus fertigungstechnischen Gründen nicht möglich, so dass zu der Maßnahme des Ausschleifens gegriffen werden muss. Dies ist mit hohem Zeit- und damit Kostenaufwand verbunden.

Man greift daher bei der Präzisionsbearbeitung im Hundertstelmillimeter-Bereich oftmals auf Weichbacken zurück, welche aus einem nicht gehärteten Material gefertigt sind und sich auf- oder ausdrehen lassen. Derartige Weichbacken haben darüber hinaus den Vorteil, dass sie auf der bereits vorbearbeiteten Werkstückoberfläche, welche nach- oder endbearbeitet werden soll, beim Einspannvorgang keine Eindrückmarken hinterlassen, wie dies Hartbacken tun können.

Nach dem erfolgten Auf- oder Ausdrehen steht dann zwar ein Backensatz zur Verfügung, der die geforderte hohe Rundlaufgenauigkeit und Wiederholgenauigkeit auf dem Drehfutter bieten kann, jedoch ist dieser Backensatz im Wesentlichen auf einen festen Werkstückdurchmesser begrenzt, das heißt, hiervon nach oben oder unten abweichende Werkstückdurchmesser bedingen einen entsprechend angepassten Backensatz, der wiederum vor seinem Ersteinsatz in bekannter Weise ausgedreht werden muss. Die Herstellung entsprechender Backensätze, deren Bevorratung und insbesondere die Umrüstung von Werkzeugmaschinen (Drehbänken) von einem Backensatz für einen Werkstückdurchmesser auf einen anderen Backensatz für einen anderen Werkstückdurchmesser ist material-, zeit- und kostenintensiv.

In der Druckschrift EP 2465 626 A1 der Anmelderin wird eine bezüglich eines Durchmesserbereichs flexiblere Spannbacke mit pendelnd gelagerten Einspannkörpern vorgeschlagen, die sich - in Grenzen - an einen variablen Durchmesser des Werkstücks anpassen. Zwar nimmt dadurch die Notwendigkeit eines Spannbackenwechsels aufgrund geänderter Werkstückdurchmesser ab. Bei einem vollzogenen Wechsel besteht jedoch weiterhin die Problematik, neu montierte Spannbacken jedes Mal neu in auf Ihren Rundlauf hin, oder allgemeiner auf ihre Nullpunktlage hin, ausrichten zu müssen.

Die vorliegende Erfindung hat es sich daher zur Aufgabe gemacht, ein Spannsystem bereitzustellen, mit dem die jeweilige Spannbacke verlässlich reproduzierbar in präziser Nullpunktlage an ihrem Spannbackenträger anordenbar ist. Gegenstand der vorliegenden Erfindung ist weiterhin ein Spannfutter für eine Werkzeug- oder Greifmaschine mit wenigstens einem Spannsystem gemäß der vorliegenden Erfindung. Weiterhin ist Gegenstand der vorliegenden Erfindung eine Werkzeug- oder Greifmaschine mit wenigstens einem Spannfutter, welches wenigstens ein erfindungsgemäßes Spannsystem aufweist.

Die erste Aufgabe wird gelöst durch ein Spannsystem mit den Merkmalen des Patentanspruchs 1, die zweite durch ein Spannfutter mit den Merkmalen des Patentanspruchs 14 und die dritte durch eine Maschine mit den Merkmalen des Patentanspruchs 15.

Weiterbildungen der Erfindung sind in den abhängigen Patentansprüchen beschrieben.

Ein Spannsystem zum Spannen oder Festlegen eines Werkstückes an einer Werkzeugmaschine, insbesondere an einer Dreh-, Fräs- oder Bohrmaschine oder an einer Greif- oder Transportmaschine, hat wenigstens einen mit der Maschine verbindbaren oder verbundenen Spannbackenträger und eine mit letztgenanntem verbindbare, d. h., montierbare und wieder lösbare, mit dem Werkstück in Anlage bringbare Spannbacke. Erfindungsgemäß haben der Spannbackenträger und die Spannbacke je einen Zentrierabschnitt, der auf den jeweils anderen Zentrierabschnitt der Spannbacke bzw. des Spannbackenträgers abgestimmt ist. Abgestimmt bedeutet im Sinne dieser Schrift, dass bei bestimmungsgemäßem Einrücken der Zentrierabschnitte ineinander, diese eine zentrierte Position zueinander aufweisen. Des Weiteren hat das Spannsystem wenigstens einen Aktor, über dessen Kraft, insbesondere Aktorkraft, die Zentrierabschnitte des genannten Spannbackenträgers und der Spannbacke ineinander einrückbar, d. h., einziehbar oder eindrückbar, sind. Hierzu weist die Kraft oder zumindest eine Komponente der Kraft in Richtung des Einrückens.

Vorteil dieses Spannsystems ist, dass über den Aktor die Spannbacke am Spannbackenträger derart bewegbar ist, dass die Zentrierabschnitte in zentrierte Anlage miteinander geraten. Auf diese Weise ist die Spannbacke am Spannbackenträger auf prozesssichere und reproduzierbare Weise vorpositionierbar. Dies stellt einen großen Vorteil gegenüber herkömmlichen Spannbacken dar, da eine Einrichtzeit beim notwendigen Wechsel der Spannbacken erheblich reduziert werden kann, da eine Nullpunktlage der jeweiligen Spannbacke am Spannbackenträger über die mit dem Aktor zusammenwirkenden Zentrierabschnitte verlässlich reproduzierbar ist.

Eine Oberfläche des Werkstücks oder ein Oberflächenabschnitt davon, mit der oder dem die Spannbacke in Anlage gerät, kann beispielsweise zumindest abschnittsweise sphärisch oder eckig, insbesondere dreieckig oder ein Vielfaches davon, oder rechteckig ausgebildet sein.

In einer Weiterbildung hat das Spannsystem wenigstens ein Verbindungselement, insbesondere eine Schraube, über die die Spannbacke in ihrer Position am Spannbackenträger festlegbar ist.

Alternativ oder ergänzend zur genannten Lösung mit Schraube kann ein Bolzen mit beispielsweise einer Arretierungsvorrichtung vorgesehen sein.

In einer bevorzugten Weiterbildung sind die Zentrierabschnitte in Zusammenwirken mit dem Aktor derart ausgestaltet, dass bei eingerückten Zentrierabschnitten ein Abheben der Spannbacke vom Spannbackenträger und ein Verschieben der Spannbacke am Spannbackenträger und eine Rotation der Spannbacke gegenüber dem Spannbackenträger gehemmt sind. Auf diese Weise ist eine zum verlässlichen Vorpositionieren notwendige Anzahl von Freiheitsgraden der Spannbacke am Spannbackenträger über den Aktor und die Zentrierung der Zentrierabschnitte eingeschränkt. Die Einschränkung ist dabei vorzugsweise derart, dass lediglich die Festlegung über das Verbindungselement fehlt, um die endgültige Position der Spannbacke am Spannbackenträger zu sichern, das heißt alle Freiheitsgrade der Spannbacke einzuschränken.

In einer Weiterbildung weist die jeweilige Spannbacke des Spannsystems wenigstens einen, insbesondere zwei oder drei, zum Werkstück weisenden und mit diesem in Anlage bringbaren Einspannkörper auf.

Zudem weist das Spannsystem vorzugsweise eine Einrichtung zur Feinjustierung oder Kalibrierung einer Nullpunktlage des oder der Einspannkörper auf. Bevorzugt ist die Einrichtung zur Feinjustierung über eine Arretiereinrichtung in ihrer Justage arretierbar. Über die Einrichtung zur Feinjustierung kann diese einmalig vorgenommen werden und nach einem Demontieren und Wiedermontieren der Spannbacke an einem Spannbackenträger ohne eine weitere, zusätzliche Justierung übernommen werden. Die Arretiereinrichtung dient dabei der sicheren Fixierung dieser Feinjustierung.

In einer Weiterbildung weist die Spannbacke in einem Bereich zwischen den beiden Einspannkörpern ein Verdränger- oder Keilprofil auf, über das ein Abstand von Kontaktlinien der Einspannkörper mit dem Werkstück verstellbar ist. Das Verdränger- oder Keilprofil weist dabei einen Anlageabschnitt auf, der zum Werkstück weist und mit diesem in Anlage bringbar ist. Über seine Anlage und die verdrängende oder keilende Wirkung des Profils passt sich die so ausgebildete Spannbacke dann automatisch an den Durchmesser des Werkstücks an.

Vorzugsweise sind die Einspannkörper und das Verdränger- oder Keilprofil gemäß dem ersten Ausführungsbeispiel der europäischen Patentanmeldung EP 2 465 626 A1 ausgestaltet.

Alternativ dazu ist die Spannbacke als Dreh- oder Frästeil, insbesondere als sogenannte "weiche Spannbacke", an den Durchmesser des Werkstücks angepasst oder anpassbar ausgestaltet.

In einer Weiterbildung ist der Aktor derart ausgestaltet, dass er zumindest abschnittsweise elastisch deformierbar ist. Aus der elastischen Deformierung resultiert dann die Kraft zur Zentrierung der Spannbacke gegen den Spannbackenträger. In diesem Falle handelt es sich um einen passiven Aktor, dessen Kraft durch eine Abstandsänderung der Spannbacke zum Spannbackenträger resultiert. Alternativ dazu ist es auch vorstellbar, dass aktive Aktoren, beispielsweise ein pneumatischer oder hydraulischer Zylinder oder ein Elektromagnet zum Erzeugen der Kraft verwendbar sind.

Gegenüber den aktiven Aktoren erweist sich jedoch der passive Aktor als vorrichtungstechnisch weniger aufwendig und zudem robuster. Beispielhaft kann der Aktor als ein Federelement, insbesondere eine Druck- oder Zugfeder, eine Blattfeder, ein Elastomerelement oder als eine Gasfeder ausgestaltet sein oder kann diese aufweisen.

Vorzugsweise ist in einer Weiterbildung der Aktor am Spannbackenträger angeordnet. Damit können, sofern vorteilhafter Weise die Zentrierabschnitte und eine Schnittstelle der Spannbacke mit dem Aktor standardisiert sind, auswechselbare Spannbacken, unterschiedlicher Art auf den Spannbackenträger montiert werden, ohne dass die Spannbacke selbst jeweils einen Aktor aufweisen muss. Dies führt zu einer erheblichen Reduzierung der nötigen Aktoren. Anstatt eines Aktors oder wenigstens eines Aktors pro Spannbacke ist dann nur ein Aktor oder wenigstens ein Aktor für den Spannbackenträger notwendig. Alternativ dazu kann der Aktor oder können die Aktoren selbstverständlich an der Spannbacke oder, falls mehrere Aktoren vorgesehen sind, wechselseitig an beiden genannten Teilen verbaut sein.

Aus Gründen der Einfachheit und im Sinne der Kürze der Patentanmeldung werden die Weiterbildungen des Aktors lediglich mit Bezug zur bevorzugten Variante "Aktor ist am Spannbackenträger angeordnet" ausformuliert. Es sei darauf hingewiesen, dass diese Weiterbildungen natürlich auch für die alternativen Ausführungsformen "Aktor ist am Spannbackenträger angeordnet" oder "Aktoren sind wechselseitig an beiden genannten Teilen angeordnet" gelten können.

In einer Weiterbildung weist der Aktor ein Kontaktstück, insbesondere ein sphärisches Element oder eine Kugel, auf, mit dem er zur Übertragung der Kraft in Anlage mit der Spannbacke bringbar ist. Die Kugel oder das sphärisch ausgebildete Kontaktstück hat dabei den Vorteil, dass es vergleichsweise gut an der Spannbacke abgleiten kann. Alternativ kann das Kontaktstück ein Bolzen sein. Dieser kann beispielsweise, mit dem bereits genannten Vorteil, einen sphärischen oder kugelförmigen Endabschnitt aufweisen, mit dem er zur Übertragung der Kraft in Anlage mit der Spannbacke bringbar ist.

In einer Weiterbildung ist der Aktor beispielsweise als Druckstück ausgestaltet, das beispielsweise eine in den Spannbackenträger eingebrachte Hülse, eine darin konzentrisch angeordnete Druckfeder und eine an dieser gelagerte Kugel als Kontaktstück aufweist.

In einer Weiterbildung ist der Aktor demgemäß abschnittsweise in einem sich quer zu einer Einrückrichtung erstreckenden Nocken des Spannbackenträgers angeordnet, wobei das Kontaktstück, insbesondere die Kugel, zumindest abschnittsweise aus dem Nocken herausragt, um in Anlage mit der Spannbacke geraten zu können.

Alternativ oder ergänzend dazu ist es möglich, dass der Aktor - anstatt in einem Nocken - in einer sich zur Einrückrichtung im Wesentlichen parallel ersteckenden Führungs- oder Anlagefläche des Spannbackenträgers angeordnet ist.

Das Kontaktstück, insbesondere die Kugel oder der Bolzen, kann zumindest abschnittsweise aus der Führungs- oder Anlagefläche des Spannbackenträgers herausragen, um in Anlage mit der Spannbacke geraten zu können.

Alternativ oder ergänzend ist es möglich, dass das Kontaktstück des Aktors und dessen elastisch deformierbares Element (Federelement) jeweils auf einen der Verbindungspartner - die Spannbacke und den Spannbackenträger - verteilt angeordnet sind.

So kann beispielsweise das Kontaktstück ein aus der Spannbacke hin zum Nocken ragender, fest oder lösbar mit der Spannbacke verbundner Bolzen sein, wobei der elastisch deformierbare Abschnitt oder das Federelement des Aktors, beispielsweise als Blattfeder, am Spannbackenträger angeordnet ist.

Die Blattfeder ist vorzugsweise eine gegen die Einrückrichtung angewinkelte, insbesondere gegen eine Längsachse des Bolzens angestellte / angewinkelte, Blechzunge.

Vorzugsweise ist die Blechzunge ein Abschnitt eines am Spannbackenträger angeordneten Blechs, wobei diese eine Durchgangsausnehmung hat, in die der Bolzen - oder allgemein das am anderen Verbindungspartner angeordnete Kontaktstück - eintauchen kann und in Anlage mit der Blechzunge gerät, woraus die Kraft des Aktors resultiert.

In einer Weiterbildung ist demgemäß an der Spannbacke ein Kontaktabschnitt, insbesondere eine Aufnahme in Form einer Mulde oder einer im Wesentlichen sphärischen Ausnehmung, vorgesehen.

Mit dem Kontaktabschnitt kann dann das Kontaktstück zur Übertragung der Kraft formschlüssig und/oder kraftschlüssig in Anlage gebracht werden. Mittels des Form- und/oder Kraftschlusses mit dem Kontaktabschnitt ist es möglich, dass eine Wirkrichtung der Kraft des Aktors nicht zwingend der Einrückrichtung der Zentrierabschnitte entsprechen muss, sondern gegen diese angestellt sein kann.

Eine Möglichkeit, dies umzusetzen ist beispielsweise, zwei Aktoren vorzusehen, deren Wirkrichtungen hin zur Einrückrichtung eingewinkelt oder von der Einrückrichtung abgewinkelt sind. Durch diese Ein- oder Abwinklung kann bereits, zusätzliche zu den Zentrierabschnitten, ein zentrierender Effekt erreicht werden.

Ein Möglichkeit diese ein- oder abgewinkelten Wirkrichtungen zu realisieren besteht beispielsweise darin, dass die genannten Nocken gegen die Einrückrichtung ein- oder abgewinkelt angeordnet sind.

In einer Weiterbildung ist der Kontaktabschnitt an einer Ausnehmung der Spannbacke ausgebildet, die den Nocken zumindest abschnittsweise überdeckt, wenn die Spannbacke vorpositioniert oder positioniert ist.

Vorzugsweise ist zwischen dem Nocken und der Ausnehmung ein Spalt ausgebildet, so dass der Aktor, insbesondere das Kontaktstück, einen ausreichend freien Hub zur Verfügung hat, über den die Vorpositionierung und/oder die Positionierung (d. h., die Zentrierung) etwa in der Einrückrichtung erfolgen kann.

In einer Weiterbildung ist die Spannbacke etwa in der Einrückrichtung auf den Spannbackenträger aufschiebar, wohingegen die Ausnehmung hin zum Nocken rotierbar oder schwenkbar ist.

In einer bevorzugten Weiterbildung stellt das Kontaktstück des Aktors mit dem Kontaktabschnitt der Spannbacke einen ausreichenden Form- und/oder Kraftschluss her, so dass die Spannbacke gegen einen Verlust der Nullpunktlage oder Vorpositionierung, ausreichend gesichert ist.

In einer Weiterbildung weisen die Zentrierabschnitte in einer ersten Zentrierebene, in der die Spannbacke gegen den Spannbackenträger verschiebbar oder aufschiebbar ist, einen die erste Zentrierebene aufspannenden Dreipunktkontakt oder zueinander angestellter Linienkontakte oder einen Linien- und einen quer dazu beabstandeten Punktkontakt auf. Diese Linienkontakte können jeweils ein Abschnitt eines Flächenkontaktes außerhalb der ersten Zentrierebene sein.

Noch sicherer ist die Spannbacke am Spannbackenträger festgelegt, wenn in einer Weiterbildung die Zentrierabschnitte in einer zweiten Zentrierebene, die zur ersten Zentrierebene angestellt ist, einen die zweite Zentrierebene aufspannenden Dreipunktkontakt oder zueinander angestellte Linienkontakte oder eine Linien- und einen quer dazu beabstandeten Punktkontakt aufweisen. Auch diese Linienkontakte können jeweils ein Abschnitt eines Flächenkontaktes außerhalb der zweiten Zentrierebene sein.

Ergänzend kann eine Rotationssicherung der Spannbacke relativ zum Spannbackenträger über eine sich etwa in Einrückrichtung erstreckende Nut-Feder Verbindung zwischen dem Spannbackenträger und der Spannbacke vorgesehen sein.

Die Zentrierabschnitte sind effektiv ausgestaltet, wenn sie in wenigstens einer Zentrierebene, insbesondere in der ersten und/oder der zweiten, einen im Wesentlichen U-förmigen oder V-förmigen oder schwalbenschwanzförmigen Querschnitt aufweisen.

Alternativ oder ergänzend können die Zentrierabschnitte in genannter Zentrierebene beispielsweise jeweils einen einfachen, linearen Querschnitt aufweisen.

Um die Zentrierung mit möglichst einfach ausgestalteten Zentrierabschnitte zu erreichen, können die Zentrierabschnitte beispielsweise über eine zur Einrückrichtung im Wesentlichen parallele Nut-Feder-Verbindung der Spannbacke und des Spannbackenträgers und ergänzend über quer zur Einrückrichtung verlaufende, lineare Anschläge der Spannbacke und des Spannbackenträgers ausgebildet sein.

Insbesondere bei rotierender Bewegung des Werkstücks oder eine rotierenden Bewegung eines Werkzeugs um das Werkstück weist das Spannsystem in einer Weiterbildung wenigstens drei Spannbackenträger mit jeweils einer Spannbacke auf, die gemäß der vorangegangenen Beschreibung ausgestaltet sind. Dabei sind die Spannbackenträger mit ihrer Spannbacke, bezogen auf ein Spannzentrum oder eine Drehachse der Spannbackenträger oder des Werkzeugs, umfänglich im Wesentlichen gleich verteilt angeordnet. Bei drei Spannbackenträgern ergibt sich dann ein Winkelabstand von 120°, bei sechs 60° usw.

Es ist alternativ möglich, dass das Spannsystem so ausgestaltet ist, dass es nur einen Spannbackenträger mit der Spannbacke und, als Widerlager dazu, wenigstens eine feste Anlage aufweist, oder dass es zwei Spannbackenträger mit jeweiliger Spannbacke und, als Widerlager dazu, nur eine feste Anlage aufweist.

Über die Einrichtungen zur Feinjustierung oder Kalibrierung der Nullpunktlage der Einspannkörper ist dann ein Rundlauf besonders gut kalibrierbar. Besonders bevorzugt ist dann natürlich jeweils die Arretiereinrichtung an der jeweiligen Spannbacke vorgesehen, um den Rundlauf auch bei einem Spannbackenwechsel, insbesondere bei einer Wiedermontage der vormals demontierten Spannbacken, prozesssicher sicherzustellen.

Gegenstand der vorliegenden Erfindung ist weiterhin ein Spannfutter für eine Werkzeugmaschine mit wenigstens einem Spannsystem gemäß der vorangegangenen Beschreibung. Weiterhin ist Gegenstand der vorliegenden Erfindung eine Werkzeugmaschine mit mindestens einem derartigen Spannfutter.

Weitere Einzelheiten, Aspekte und Vorteile der vorliegenden Erfindung ergeben sich für vier erfindungsgemäße Ausführungsbeispiele aus der nachfolgenden Beschreibung anhand der Zeichnungen. Es zeigen:
Figur 1 eine perspektivische Ansicht eines ersten Ausführungsbeispiels eines Spannsystems mit einer Grundbacke einem Adapter und einer Spannbacke;
Figur 2 eine Vorderansicht des Spannsystems gemäß Figur 1;
Figur 3 eine Draufsicht auf eine zur Spannbacke weisenden Seite des Adapters gemäß den Figuren 1 und 2;
Figur 4 eine Seitenansicht des Spannsystems gemäß den vorangegangenen Figuren;
Figur 5 ein Teilschnitt in Seitenansicht des Spannsystems gemäß den vorangegangenen Figuren mit freigeschnittener Darstellung eines Aktors;
Figur 6 den Adapter gemäß den vorangegangenen Figuren in einer Seitenansicht;
Figur 7 den Adapter gemäß den vorangegangenen Figuren in einer perspektivischen Ansicht;
Figur 8 den Adapter gemäß den vorangegangenen Figuren in einer Ansicht von oben;
Figur 9 den Adapter mit der Spannbacke gemäß den vorangegangenen Figuren in einem Schnitt parallel zur Drehachse des Spannsystems;
Figur 10 ein zweites Ausführungsbeispiel eines erfindungsgemäßen Spannsystems mit weichen Spannbacken und einem eingespanntem Werkstück kleinen Durchmessers;
Figur 11 ein drittes Ausführungsbeispiel eines erfindungsgemäßen Spannsystems mit "weichen Spannbacken" und einem eingespanntem Werkstück großen Durchmessers;
Figur 12 den über die Ausführungsbeispiele gleichbleibenden Adapter mit einem Rohteil einer "weichen Spannbacke";
Figur 13 den über die Ausführungsbeispiele gleichbleibenden Adapter mit einer weichen Spannbacke gemäß Figur 10;
Figur 14 den über die Ausführungsbeispiele gleichbleibenden Adapter mit einer weichen Spannbacke gemäß Figur 11; und
Figur 15 den über die Ausführungsbeispiele gleichbleibenden Adapter in einer Ansicht von unten.

Es sei vorab festgehalten, dass der Gegenstand der vorliegenden Erfindung anhand einer Spannbacke beschrieben wird, welche zum Einspannen von Werkstücken mit zumindest teilweise sphärischer Umfangsoberfläche an Werkzeugmaschinen, insbesondere Drehbänken vorgesehen ist. Der Gegenstand der vorliegenden Erfindung ist jedoch nicht auf dieses konkrete Ausführungsbeispiel beschränkt; die erfindungsgemäße Spannbacke kann - gegebenenfalls nach entsprechenden Umrüstmaßnahmen - auch zum Einspannen von Werkzeugen an Bearbeitungsmaschinen oder -stationen verwendet werden. Weiterhin sind auch andere Werkzeugmaschinen außer Drehbänken mit der erfindungsgemäßen Spannbacke ausrüstbar. Weiterhin ist die erfindungsgemäße Spannbacke bei rein manuell zu bedienenden, halbautomatischen oder vollautomatischen Werkzeugmaschinen verwendbar.

Die einzelnen Darstellungen der Zeichnung sind z.T. abstrahiert bzw. vereinfacht und stellen keine konkreten Konstruktionsangaben dar; weiterhin sind die einzelnen Figuren nicht maßstäblich zueinander.

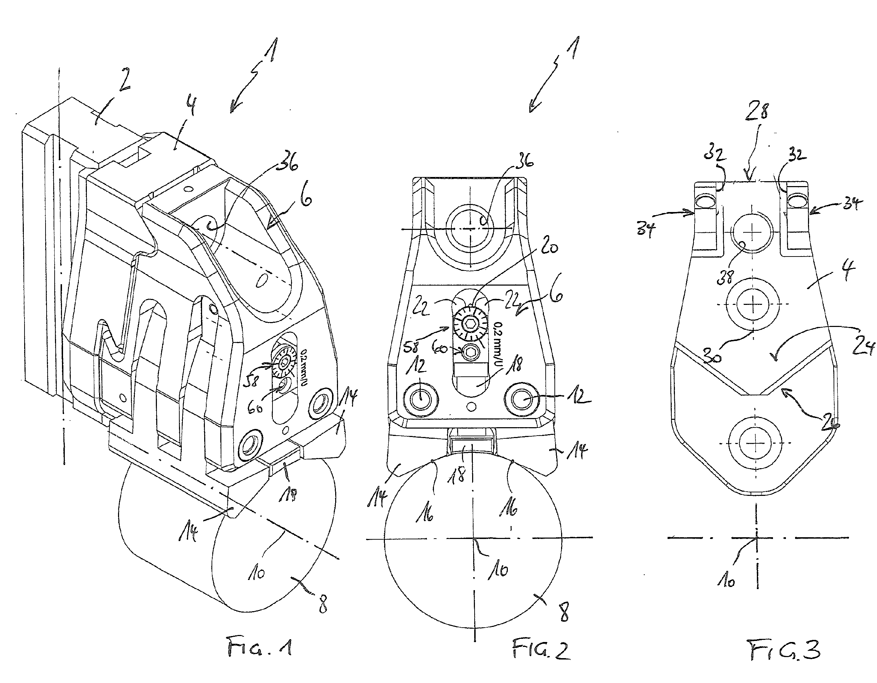

Figur 1 zeigt ein Spannsystem 1 einer Drehmaschine (nicht dargestellt). Das Spannsystem 1 ist dabei lediglich in dem Umfang dargestellt, der zum Verständnis der Erfindung notwendig ist. Daher ist lediglich eine Grundbacke 2 des Spannsystems 1, ein darauf befestigter Adapter 4 und eine daran wiederum befestigte Spannbacke 6 dargestellt. In Zusammenwirken mit zwei weiteren, nicht dargestellten, baugleichen Spannsystemen ist ein Werkstück 8 der Drehmaschine eingespannt. Die Spannsysteme 1 sind dabei auf einem konzentrisch zu einer Drehachse 10 angeordneten Teilkreis mit einem gleichmäßigen Winkelabstand von 120° gleichverteilt angeordnet.

Die jeweilige Spannbacke 6 ist als sogenannte Pendel backe ausgestaltet, die zwei jeweils an einem Bolzen 12 pendelnd gelagerte Einspannkörper 14 hat. Diese sind über einen Linienkontakt 16 jeweils mit dem Werkstück 8 in Anlage. Die Spannbacke 6 ist mit ihren Einspannkörpern 14 gemäß dem in der Druckschrift EP 2 465 626 A1 beschriebenen Prinzip mit einem mittig zwischen den Einspannkörpern 14 angeordneten, radial zur Drehachse 10 verschieblichen Anlageteil 18 ausgestaltet. Dieses hat radial außen einen keilförmigen Endabschnitt 20, der Endabschnitte 22 von Hebeln (nicht sichtbar) der Einspannkörper 14 separiert, wobei es mit den Endabschnitten 22 in Anlage ist. Auch das Anlageteil 18 liegt mit einem Endabschnitt am Werkstück 8 an. Gemäß der Druckschrift EP 2 465 626 A1 ist so über die Anlage des Anlageteils 18, dessen Verschieblichkeit und den keilförmigen Endabschnitt 20, sowie die pendelnde Lagerung der Einspannkörper 14 eine im Prinzip automatische Anpassung der Einspannkörper 14, bzw. der Linienkontakte 16, an den vorliegenden Durchmesser des Werkstücks 8 sichergestellt. Im gezeigten Fall können die Spannsysteme 1 einen Durchmesserbereich des Werkstücks von 40 bis 100 mm abdecken. Das gezeigte Werkstück weist einen Durchmesser von 50 mm auf. Für weitere Ausführungen zur Funktion des Pendelmechanismus der Spannbacke 6 sei auf die Druckschrift EP 2 465 626 A1 verwiesen.

Figur 3 zeigt den Adapter 4 gemäß Figur 1 in einer Draufsicht, die der Blickrichtung der Figur 2 entspricht. Das Werkstück 8 und die Spannbacke 6 sind dabei aus der Darstellung entfernt. Der Adapter 4 hat eine Anlagefläche 24, mit der die axiale Position der Spannbacke 6 mit Bezug zur Drehachse 10 festgelegt ist. Des Weiteren hat der Adapter 4 einen Zentrierabschnitt 26, der sich in einer Blickrichtung ausgehend von der Drehachse 10 V-förmig oder schwalbenschwanzförmig nach radial außen aufweitet. Der Adapter 4 hat einen weiteren Zentrierabschnitt 28, der sich in Form einer Nut mit zwei im Wesentlichen parallelen, beidseitig einer durch die Drehachse 10 aufgespannten Symmetrieebene 30, Zentrierflächen 32 erstreckt. Die Zentrierflächen 32 sind dabei an symmetrisch zur Mittelebene 30 angeordneten Nocken 34 des Adapters 4 ausgebildet.

Gemäß den Figuren 1 bis 3 hat die Spannbacke 6 eine Durchgangsbohrung 36, die von einer Befestigungsschraube (nicht dargestellt) durchsetzbar, insbesondere durchsetzt ist, die in eine Gewindebohrung 38 des Adapters 4 einschraubbar, insbesondere eingeschraubt ist. Auf diese Weise ist die Spannbacke 6 fest am Adapter 4 angeordnet.

Die Spannbacke 6 und der Adapter 4 haben eine sich in Richtung hin zur Drehachse 10 erweiternde, trapezförmige Grundform.

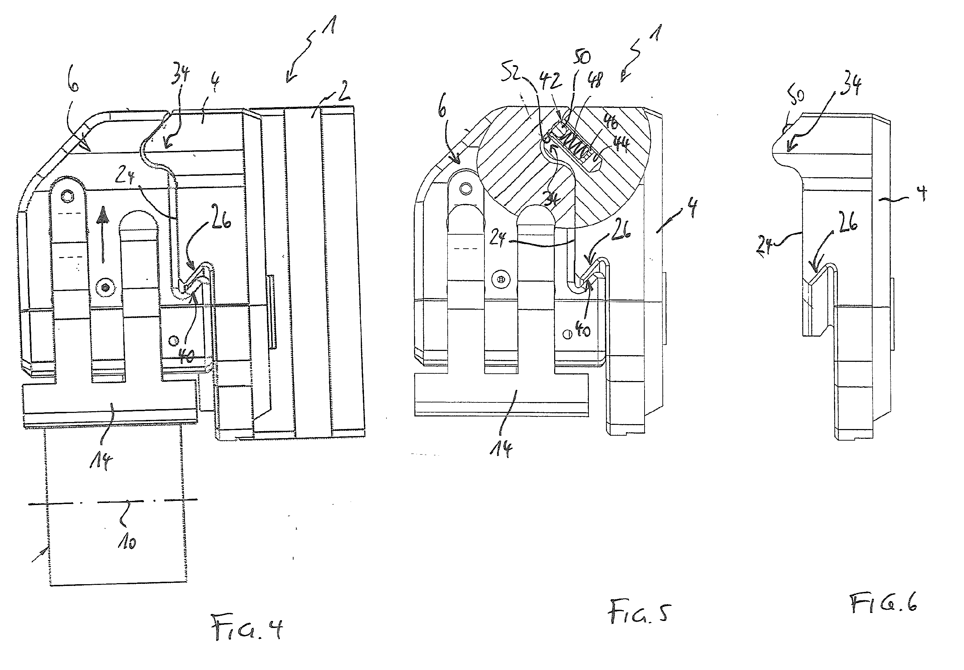

Figur 4 zeigt das Spannsystem 1 in einer Ansicht von der Seite, die einer Blickrichtung gemäß Figur 2 von rechts entspricht. Der Adapter 4 kann auch als Spannbackenträger bezeichnet werden, da an ihm die Spannbacke 6 über den Zentrierabschnitt 26 und die Zentrierflächen 32 zentriert und über die Befestigungsschraube (nicht dargestellt) befestigt wird. Der Spannbackenträger kann auch aus einem einstückig mit der Grundbacke 2 ausgebildeten Adapterabschnitt ausgebildet sein. Hier ist beliebige Ein- oder Mehrstückigkeit denkbar.

Der Spannbackenträger kann einstückig mit einem Spannfutter der Maschine ausgestaltet sein.

Figur 4 zeigt als zusätzliche Information, dass die Spannbacke 6 einen auf den Zentrierabschnitt 26 des Adapters 4 (Spannbackenträger) geometrisch abgestimmten Zentrierabschnitt 40 hat. Dieser ist analog dem Zentrierabschnitt 26 des Adapters 4 in der Anlageebene 30 mit einem v-förmigen bzw. schwalbenschwanzförmigen Querschnitt ausgestaltet. Aus den Darstellungen gemäß den Figuren 4 bis 5 und der Figur 7 wird zudem ersichtlich, dass die Zentrierabschnitte 26, 40 des Adapters 4 und der Spannbacke 6 in Ebenen parallel zur Mittelebene 30 ebenso V- bzw. schwalbenschwanzförmig ausgestaltet sind. Auf diese Weise erfolgt bei Aufschieben der Spannbacke 6 entlang einer in Figur 4 dargestellten Einrückrichtung (Pfeil) eine Zentrierung der Spannbacke 6 bezüglich ihrer Rotationsposition bezogen auf die Drehachse 10 und den Adapter 4 und bezüglich ihrer Radialposition bezogen auf die Drehachse 10. In anderen Worten ist die Spannbacke 6, bezogen auf die Drehachse 10 und den Spannbackenträger 4 über die Zentrierabschnitte 26, 40 und die Zentrierflächen 32 rotations- und bezogen auf eine Verschiebung nach radial außen translationsgehemmt.

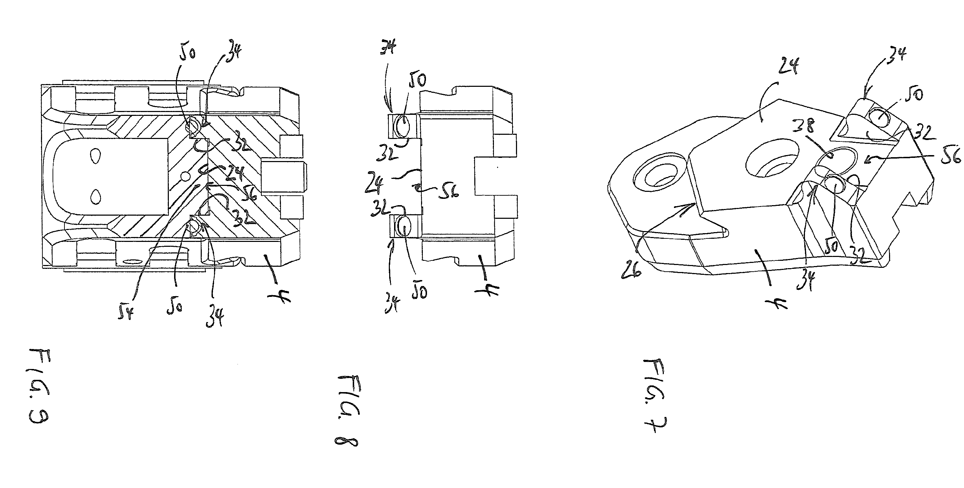

Aus den Figuren 4 und 5 ist weiterhin ersichtlich, dass die Nocken 34 jeweils einen als Druckstück ausgebildeten Aktor 42 tragen, der weit überwiegend innerhalb des Nockens 34 angeordnet ist. Eine Hülse 46 des Aktors 42 ist in eine Sacklochbohrung 44 des Nockens 34 eingepresst. In der Hülse 46 ist eine Druckfeder 48 aufgenommen. Dieses elastisch deformierbare Element trägt ein als Kugel ausgebildetes Kontaktstück 50, welches von der Druckfeder 48 an einen radial nach innen weisenden Kragen der Hülse 46 gedrückt wird. Der Kragen der Hülse 46 wird von einer Kalotte des Kontaktstücks 50 durchsetzt, sodass die Kalotte eine Außenfläche des Nockens 34 überragt, was aus Figur 6 ersichtlich ist. Den gleichen Zusammenhang zeigen die Figuren 7 bis 9 in einer perspektivischen Ansicht, einer Ansicht von oben bzw. radial außen, und einer Ansicht von radial außen in einem Schnitt.

Erfindungsgemäß tragen das Zusammenwirken der Zentrierabschnitte 26, 32, 40mit dem Aktor 42 zur prozesssicheren Vorpositionierung und Zentrierung der Spannbacke 6 am Spannbackenträger 4 (Adapter) bei. Die Kraft des elastischen Elements 48 (Druckfeder) des Aktors 42 ist dabei derart bemessen, dass bei Anlage des Kontaktstücks 50 an einer den Nocken 34 in etwa nachempfundenen Ausnehmung 52 der Spannbacke 6 eine Kraft resultiert, die ausreicht, den Zentrierabschnitt 40 in den Zentrierabschnitt 26 des Adapters 4 einzurücken. Die Spannbacke 6 weist dabei eine etwa dem Nocken 34 entsprechende Ausnehmung 52 auf, in der eine kleine Mulde zur abschnittsweisen Aufnahme des Kontaktstücks 50 - der Kalotte - ausgeprägt ist. Durch Eingriff des Kontaktstücks 50 - der Kalotte - in diese Mulde erfolgt eine zumindest kraftschlüssige Anlage des Kontaktstücks 50 an der Ausnehmung 52, so dass die Spannbacke 6 über den Aktor 42 prozesssicher mit ihrem Zentrierabschnitt 40 in den Zentrierabschnitt 26 eingerückt wird. Die Sicherung gegen eine Rotation der Spannbacke 6 um die Drehachse 10 bezüglich des Adapters 4 wird durch die bereits erwähnten Zentrierflächen 32 erreicht, von denen eine die Nocken 34 trennende Nut 56 lateral begrenzt ist. Diese Zentrierflächen 32 geraten beim Einrücken oder Aufschieben der Spannbacke 6 auf den Adapter 4 in Anlage mit entsprechenden Seitenflächen eines Steges 54 der Spannbacke 6.

Ist die Befestigungsschraube (nicht dargestellt) noch nicht angezogen, ist die Spannbacke in diesem vorpositionierten Zustand somit gegen Rotation bezüglich des Adapters 4 um die Drehachse 10 und gegen ein weiteres nach radial außen gerichtetes Verschieben bezüglich des Adapters 4 und der Drehachse 10 gesichert. Die Endposition der Spannbacke 6 und ihre Fixierung darin wird durch die bereits besprochene Befestigungsschraube und deren Einsetzen in die Durchgangsausnehmung 36 und die Gewindebohrung 38 gemäß den Figuren 1 bis 3 erreicht.

Nach dem beschrieben Vorpositionier- und Zentriervorgang und wenn im Anschluss die Spannbacke 6 am Adapter 4 (Spannbackenträger) über die Befestigungsschraube befestigt wurde und gleiches für die restlichen, nicht dargestellten Spannbacken erfolgte, kann über eine an der jeweiligen Spannbacke 6 vorgesehene Justiereinrichtung 58 der Rundlauf des Werkstücks 8 eingestellt werden. Vorgesehen ist zudem eine Arretiereinrichtung 60, über die der mit der Justiereinrichtung 58 eingestellte Rundlauf gegen Verstellung gesichert werden kann. Auf diese Weise sind so eingestellte Spannbacken 6 auf einfachste Weise demontierbar und bei Wiedergebrauch über den Aktor 42 und die Zentrierabschnitte 26, 40 und 32 in ihrer Nullpunktlage wiedermontierbar. Mit dem so bereitgestellten Spannsystem 1 kann ein Spannbackenwechsel prozesssicher und schnell erfolgen, ohne dass, wie beispielsweise im Falle der zuvor dargelegten weichen Spannbacken, ein Einschleifen oder Einfräsen zur Herstellung des Rundlaufs, bzw. der Nullpunktlage der Spannbacken notwendig wäre. Das Spannsystem 1, sowie ein damit ausgestattetes Spannfutter oder eine entsprechende Werkzeug- oder Greifmaschine, insbesondere eine Dreh-, Fräs- oder Bohrmaschine, weist somit geringere Umrüstaufwände bei Wechsel der Spannbacken auf.

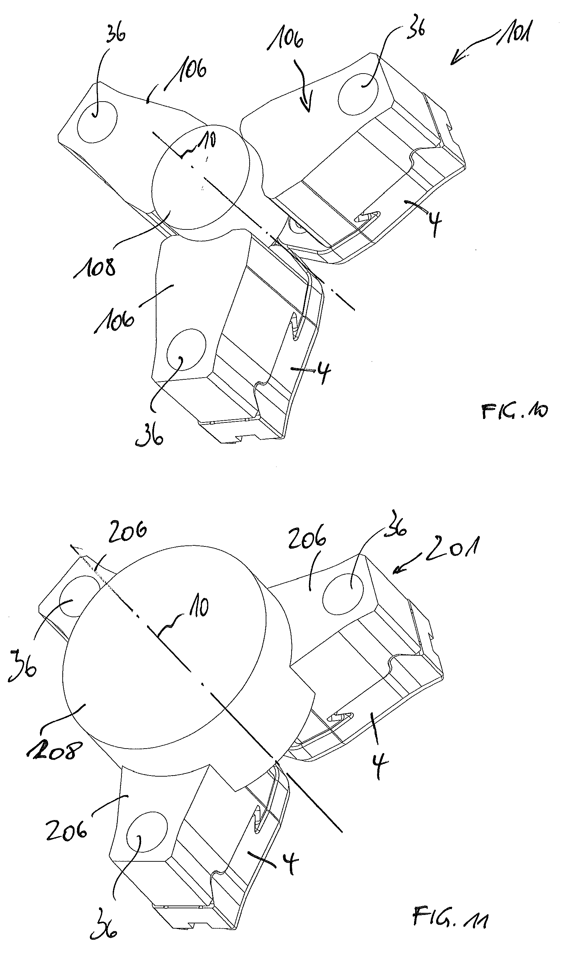

Figur 10 zeigt ein zweites Ausführungsbeispiel eines Spannsystems 101 mit drei Spannbackenträgern (Adaptern) 4, die jeweils mit einer eine als "weiche Backe" ausgestalteten Spannbacke 106 verbunden sind. Die Spannbacken 106 sind dabei einstückig und für ein Werkstück 108 mit einem Durchmesser von 50 mm ausgedreht.

Figur 11 zeigt ein drittes Ausführungsbeispiel eines Spannsystems 201 mit drei Adaptern 4 und drei jeweils daran angeordneten, als "weiche Spannbacke" ausgebildeten Spannbacken 206.

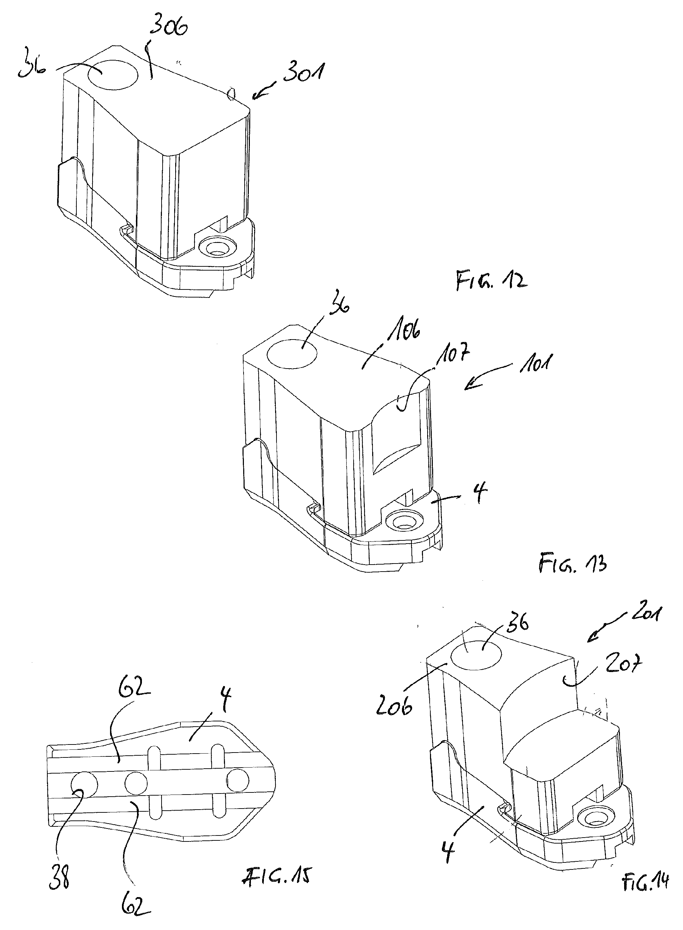

Figur 12 zeigt eine Rohspannbacke 306 eines Spannsystems 301, die als Rohteil für die Spannbacken 106; 206 dient.

Gemäß Figur 13 und 14 weisen die Spannbacken 106; 206 jeweils eine Anlagefläche 107; 207 auf, die zum Einspannen in Anlage mit dem Werkstück 108; 208 gerät.

Figur 14 zeigt die Spannbacke 206 gemäß Figur 11 ohne Werkstück 208, so dass hier die Einspannfläche 207 sichtbar ist. Gemäß dem größeren Werkstücksdurchmesser ist die Spannbacke 206 nach radial außen weiter ausgedreht (100 mm) als die Spannbacke 106 (50mm).

Figur 15 zeigt den Adapter 4, der über alle Ausführungsbeispiele zur maschinenseitigen Festlegung der jeweiligen Spannbacke 6; 106; 206; 306 dient. Zu erkennen ist zum Einen die Gewindebohrung 38, die als Durchgangsbohrung ausgestaltet ist, sowie zwei Führungsnute 62, die bezogen auf die Drehachse 10 in Längs- bzw. Radialrichtung den Boden des Adapters 4 durchziehen. In die Nuten 62 greifen maschinenseitig entsprechende Federn der Grundbacke, an der der Adapter 4 befestigt wird, ein.

Anhand der vorangegangenen Figuren ist gut zu erkennen, dass der Adapter 4 und die Spannbacke 6; 106; 206; 306, ausgehend von der Durchgangsbohrung 36 radial hin zur Drehachse 10 eine sich konisch erweiternde Grundform haben. Daraus resultiert, dass die Abstützung der Spannbacke 6; 106; 206 umfänglich am Werkstück vergleichsweise breit ist, wenn als Vergleich herkömmliche, "weiche Backen" herangezogen werden. Letztgenannte weisen nämlich eine im Wesentlichen von radial außen nach radial innen rechteckige Form auf. Über die konische Erweiterung wird somit die Anlagefläche am Werkstück oder der Abstand der Kontaktlinien der Einspannkörper am Werkstück vergrößert, so dass eine Werkstückbelastung beim Drehen, Fräsen, Bohren, etc verringert ist.

Beschrieben wurde insoweit zusammenfassend ein Spannsystem zum Einspannen von Werkstücken, insbesondere Werkstücken mit zumindest teilweise sphärischer Umfangsoberfläche, an Werkzeugmaschinen, insbesondere Drehbänken, mit: einer Spannbacke, welche direkt oder indirekt an einem Spannfutter der Werkzeugmaschine, allgemein ausgedrückt an einem Spannbackenträger, anordenbar ist. Dabei haben der Spannbackenträger und die Spannbacke wenigstens je einen, auf den jeweils anderen abgestimmten, Zentrierabschnitt und das Spannsystem weist wenigstens einen Aktor auf, über dessen Kraft die Zentrierabschnitte ineinander, zumindest zur reproduzierbaren Vorpositionierung, einrückbar sind. Gegenstand der Erfindung ist weiterhin ein Spannfutter für eine Werkzeugmaschine mit wenigstens einem derartigen Spannsystem, sowie eine Werkzeugmaschine mit mindestens einem derartigen Spannfutter.

### Bezugszeichenliste:

- 1; 101; 201; 301: Spannsystem
- 2: Grundbacke
- 4: Adapter
- 6; 106; 206; 306: Spannbacke
- 8; 108; 208: Werkstück
- 10: Drehachse
- 12: Lagerbolzen
- 14: Einspannkörper
- 16: Linienkontakt
- 18: Anlageteil
- 20: Keilabschnitt
- 22: Endabschnitt
- 24: Anlagefläche
- 26: Zentrierabschnitt
- 28: Zentrierabschnitt
- 30: Mittelebene
- 32: Zentrierfläche
- 34: Nocken
- 36: Durchgangsbohrung
- 38: Gewindebohrung
- 40: Zentrierabschnitt
- 42: Aktor
- 44: Sacklochbohrung
- 46: Hülse
- 48: Druckfeder
- 50: Kontaktstück
- 52: Ausnehmung
- 54: Steg
- 56: Nut
- 58: Justiereinrichtung
- 60: Arretiereinrichtung
- 62: Führungsnut
- 107; 207: Anlagefläche

## Patentansprüche

1. Spannsystem zum Spannen eines Werkstücks (8) an einer Werkzeugmaschine oder einer Greifmaschine, das wenigstens einen Spannbackenträger (4) und eine damit verbindbare, mit dem Werkstück (8) in Anlage bringbare Spannbacke (6; 106; 206) aufweist, **dadurch gekennzeichnet, dass** der Spannbackenträger (4) und die Spannbacke (6; 106; 206) wenigstens je einen (26, 56), auf den jeweils anderen (40, 54) abgestimmten, Zentrierabschnitt (26, 40, 54, 56) haben und wenigstens ein Aktor (42) vorgesehen ist, über dessen Kraft die Zentrierabschnitte (26, 40, 54, 56) ineinander einrückbar sind.

2. Spannsystem nach Anspruch 1, wobei der Aktor (42) zumindest abschnittsweise elastisch deformierbar ist.

3. Spannsystem nach Anspruch 1 oder 2, wobei der Aktor (42) ein Federelement (48) hat.

4. Spannsystem nach Anspruch 1 bis 3, wobei der Aktor (42) am Spannbackenträger (4) angeordnet ist.

5. Spannsystem nach Anspruch 4, wobei der Aktor (42) ein Kontaktstück (50) hat, mit dem er zur Übertragung der Kraft in Anlage mit der Spannbacke (6) bringbar ist.

6. Spannsystem nach Anspruch 5, wobei der Aktor (42) abschnittsweise in einem sich zumindest abschnittsweise quer zu einer Einrückrichtung erstreckenden Nocken (34) des Spannbackenträgers (4) angeordnet ist, aus dem das Kontaktstück (50) zumindest abschnittsweise herausragt.

7. Spannsystem nach Anspruch 5 oder 6, wobei an der Spannbacke (6) ein Kontaktabschnitt vorgesehen ist, mit dem das Kontaktstück (50) zur Übertragung der Kraft formschlüssig und / oder kraftschlüssig in Anlage bringbar ist.

8. Spannsystem nach Anspruch 6 und 7, wobei der Kontaktabschnitt an einer Ausnehmung (52) der Spannbacke ausgebildet ist, die den Nocken (34) zumindest abschnittsweise überdeckt, und wobei zwischen dem Nocken (34) und der Ausnehmung (52) ein Spalt ausgebildet ist.

9. Spannsystem nach Anspruch 8, wobei die Spannbacke (6) etwa in Einrückrichtung auf den Spannbackenträger (4) schiebbar ist und die Ausnehmung (52) hin zum Nocken (34) rotierbar oder schwenkbar oder klappbar ist.

10. Spannsystem nach einem der vorhergehenden Ansprüche, wobei die Zentrierabschnitte (26, 40) in einer ersten Zentrierebene einen diese aufspannenden Dreipunktkontakt oder zueinander angestellte Linienkontakte oder einen Linien- und einen quer dazu beabstandeten Punktkontakt aufweisen.

11. Spannsystem nach Anspruch 10, wobei die Zentrierabschnitte (26, 40) in einer zweiten Zentrierebene, die zur ersten Zentrierebene angestellt ist, einen die zweite Zentrierebene aufspannenden Dreipunktkontakt oder zueinander angestellte Linienkontakte oder einen Linien- und einen quer dazu beabstandeten Punktkontakt aufweisen.

12. Spannsystem nach einem der vorhergehenden Ansprüche, wobei die Zentrierabschnitte (26, 40) in wenigstens einer Zentrierebene einen im Wesentlichen u-förmigen oder v-förmigen oder schwalbenschwanzförmigen Querschnitt aufweisen.

13. Spannsystem nach einem der vorhergehenden Ansprüche mit wenigstens drei Spannbackenträgern (4) und Spannbacken (6; 106; 206; 306), die, bezogen auf ein Spannzentrum oder eine gemeinsame Drehachse (10) der Spannbackenträger (4), umfänglich im Wesentlichen gleichverteilt angeordnet sind.

14. Spannfutter mit wenigstens einem Spannsystem (1; 101; 201; 301), das gemäß einem der vorhergehenden Ansprüche ausgestaltet ist.

15. Maschine, insbesondere Werkzeugmaschine oder Greifmaschine, mit wenigstens einem Spannfutter, das nach Anspruch 14 ausgestaltet ist.
